# FASCICULE DE BREVET EUROPEEN

(11) **EP 1 759 174 B1**
(45) Date de publication et mention de la délivrance du brevet: **30.08.2017**
(21) Numéro de dépôt: 05757857.7
(22) Date de dépôt: 19.04.2005
(51) Int. Cl.: G01D 11/28

(54) **INDICATEUR DE TABLEAU DE BORD A AIGUILLE REPLIEE VISIBLE EN PERIPHERIE DE CADRAN ET A ECLAIRAGE EMBARQUE**
INSTRUMENTENTAFEL-INDIKATOR MIT EINER IN DER SKALENPERIPHERIE SICHTBAREN GEKLAPPTEN NADEL UND MIT INTEGRIERTER BELEUCHTUNG
INSTRUMENT PANEL INDICATOR WITH FOLDED NEEDLE VISIBLE IN DIAL PERIPHERY AND WITH INTEGRATED LIGHTING

(30) Priorité: 11.06.2004 FR 0406307
(43) Date de publication de la demande: 07.03.2007
(73) Titulaire: Johnson Controls Technology Company, Milwaukee, WI 53209 (US)
(72) Inventeur: FOURNIER, Joël, F-95000 Cergy (FR); VOILLOT, Stéphane, F- 95800 Courdimanche (FR)
(74) Mandataire: Wolff, Felix
(86) Numéro de dépôt international: PCT/FR2005/000938
(87) Numéro de publication internationale: WO 2006/005821

(56) Documents cités:
- EP-A- 1 213 565
- DE-A- 19 810 854
- US-A- 4 163 428
- US-B1- 6 499 852
- PATENT ABSTRACTS OF JAPAN vol. 2003, no. 05, 12 mai 2003 (2003-05-12) -& JP 2003 014508 A (DENSO CORP; TOYOTA MOTOR CORP), 15 janvier 2003 (2003-01-15)

## Description

Le domaine de l'invention est celui des indicateurs de tableau de bord de véhicule automobile ou autre engin de locomotion.

Un indicateur comporte un mouvement, une aiguille indicatrice, entraînée en rotation par le mouvement devant un cadran portant des caractères d'indication (des graduations et des nombres, notamment) le tout monté dans un réhaut d'habillage servant ainsi de protection et de cache extérieur au cadran. Le document JP2003014508 décrit un indicateur de tableau de bord selon l'état de la technique. La demanderesse a cherché à développer un indicateur à aiguille seulement visible en périphérie de cadran avec un éclairage le meilleur possible.

C'est ainsi que la demanderesse propose son invention qui concerne un indicateur de tableau de bord selon la revendication 1. De préférence, l'indicateur est monté dans un réhaut, sur lequel est fixée une vitre de protection s'étendant à l'avant du cadran.

De préférence encore, les premiers moyens d'éclairage sont des moyens embarqués agencés pour être alimentés en énergie électrique au moyen d'un flex dont une partie est enroulée autour de l'axe d'aiguille.

De préférence toujours, le doigt d'aiguille est rapporté à l'extrémité du bras d'aiguille et les premiers moyens d'éclairage sont montés à cette extrémité de bras, à l'entrée du doigt coudé.

Dans ce cas, le flex s'étend le long du bras.

Avantageusement, les premiers moyens d'éclairage comprennent une diode électroluminescente (LED) tricolore, permettant à l'extrémité indicatrice de changer de couleur selon sa position angulaire.

L'éclairage de l'indicateur de l'invention est bon et peut même être très puissant.

L'invention sera mieux comprise à l'aide de la description suivante de la forme de réalisation préférée de l'indicateur de l'invention, en référence au dessin annexé, sur lequel
- la figure 1 représente une vue en coupe de l'indicateur et
- la figure 2 représente une vue en plan du cadran de l'indicateur.

On notera que l'indicateur 1 qui va maintenant être décrit fait partie d'un ensemble d'indicateurs plus vaste intégré à un tableau de bord 2 comportant un fond arrière 3 et une vitre de protection avant 4 tenue dans un réhaut d'habillage 5 servant aussi de protection et ici de cache extérieur pour le cadran de l'indicateur 1 et certains autres.

Entre la vitre de protection 4 et le fond arrière 3 s'étend une carte de circuit imprimé 6, à l'arrière de laquelle est monté le mouvement moteur 7 de l'indicateur. Le moteur 7 porte un axe 8 traversant la carte 6 et sur lequel est emmanché un moyeu 9 d'une aiguille indicatrice 10. L'aiguille 10 est en deux parties et comporte un bras 11, s'étendant parallèlement à la carte 6, à l'extrémité 26 duquel est ici enfiché un doigt 14 coudé à angle droit pour se terminer par une extrémité indicatrice 12 s'étendant aussi parallèlement à la carte 6, repliée vers l'axe 8 du moteur. Le doigt d'aiguille 14 est dans un matériau conducteur de la lumière. Quant au bras d'aiguille 11, il est dans un matériau transparent à la lumière.

Autour de l'axe 8 du moteur 7 d'entraînement en rotation de l'aiguille 10, sont montées sur la carte 6 une pluralité de diodes d'éclairage 13, en l'espèce quatre.

Légèrement en deçà de l'extrémité intérieure du doigt 14, tournée vers la carte de circuit imprimé 6, est disposée une led tricolore 24 qui se trouve donc être embarquée sur l'aiguille 10. Elle est alimentée à partir d'un circuit flexible (flex) 25 qui s'étend le long du bras d'aiguille 11 et qui, de façon classique, est enroulé en spirale autour du moyeu 9 et de l'axe 8 du moteur 7, le flex étant électriquement relié au circuit électrique supporté par la carte 6. Le doigt d'aiguille 14, avec son extrémité indicatrice 12, est directement éclairé par la led 24. S'agissant d'une led tricolore, la couleur de l'extrémité indicatrice peut être modifiée en fonction de la position angulaire de l'aiguille.

Du fait de la transparence du bras d'aiguille 11, la partie du bras s'étendant de part et d'autre du moyeu 9 laisse la lumière des diodes 13 la traverser pour assurer un éclairage indirect du cadran, comme développé ci-après.

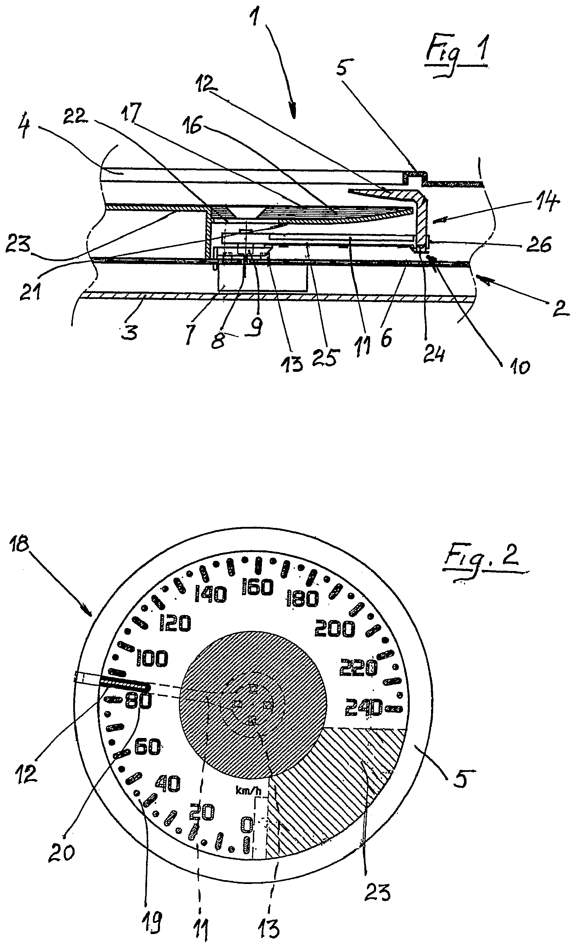

Entre le bras d'aiguille 11 et l'extrémité indicatrice 12 s'étend une lentille guide de lumière 16 destinée à être éclairée de façon indirecte par les diodes 13 à travers le bras d'aiguille 11. La face antérieure 17 de la lentille 16 sert de face avant à l'indicateur portant le cadran 18 (figure 2) qui est un masque en lexan sur lequel ont été sérigraphiés, en l'occurrence, une échelle de comptage 19 et des valeurs de vitesse 20. La lentille 16 est disposée à l'avant d'une paroi de fond 21. servant de boîte à lumière, la paroi étant percée d'une fenêtre 22 au droit du moyeu d'aiguille 9 et de la zone des diodes 13 pour laisser passer la lumière des diodes 13. La paroi de fond 21 est adjacente à une autre partie de boîte à lumière 23 qui constitue aussi une zone de maintien mécanique de la lentille 16 et dans laquelle l'aiguille 10 ne peut pas se déplacer.

Quand le moteur 7 entraîne l'aiguille indicatrice 10 en rotation sur l'axe 8, l'extrémité indicatrice 12, qui est seule partie d'aiguille visible, le bras d'aiguille 11 étant caché par la lentille 16 et le cadran 18, est entraînée en translation circulaire à la périphérie du cadran 18, le long de l'échelle de comptage 19.

La nuit, quand les diodes 13 sont allumées, l'extrémité indicatrice 12 est fortement éclairée.

## Revendications

1. Indicateur de tableau de bord comprenant une aiguille (10) montée rotative sur un axe (8) d'un moteur d'entraînement (7), l'aiguille comportant un bras (11) prolongé par un doigt coudé (14) avec une extrémité indicatrice (12) repliée vers l'axe d'aiguille (8) pour être entraînée en translation circulaire devant un cadran (18) disposé sur un conduit de lumière (16), le cadran (18) et le conduit de lumière (16) s'étendant entre l'extrémité indicatrice (12) et le bras (11) de l'aiguille, caché par le conduit (16) et le cadran (18), **caractérisé en ce qu'**il comprend des premiers moyens d'éclairage (24, 25) étant prévus pour l'éclairage direct de l'extrémité d'aiguille repliée (12) et des seconds moyens d'éclairage (13) pour l'éclairage indirect, à travers le bras d'aiguille (11), du conduit de lumière (16) et donc du cadran (18), les premiers moyens d'éclairage (24) étant des moyens embarqués agencés pour être alimentés en énergie électrique au moyen d'un circuit flexible (25) dont une partie est enroulée autour de l'axe d'aiguille (8), et le circuit flexible s'étendant le long du bras d'aiguille (11).

2. Indicateur selon la revendication 1, dans lequel il est prévu un réhaut d'habillage (5) sur lequel est fixée une vitre de protection (4).

3. Indicateur selon l'une des revendications 1 à 2, dans lequel le doigt d'aiguille (14) est rapporté à l'extrémité (26) du bras d'aiguille (11) et les premiers moyens d'éclairage (24) sont montés à cette extrémité de bras, à l'entrée du doigt coudé (14).

4. Indicateur selon l'une des revendications 1 à 3, dans lequel les premiers moyens d'éclairage comprennent une LED tricolore (24).

## Patentansprüche

1. Instrumententafel-Indikator, umfassend eine Nadel (10), die drehbar auf einer Achse (8) eines Antriebsmotors (7) montiert ist, wobei die Nadel einen Arm (11) umfasst, der durch einen gebogenen Finger (14) mit einem Indikationsende (12) verlängert ist, das zu der Nadelachse (8) umgebogen ist, um in kreisförmiger Translation vor einem Ziffernblatt (18) angetrieben zu werden, das auf einer Lichtleitung (16) angeordnet ist, wobei sich das Ziffernblatt (18) und die Lichtleitung (16) zwischen dem Indikationsende (12) und dem Arm (11) der Nadel erstrecken, der durch die Leitung (16) und das Ziffernblatt (18) verdeckt ist, **dadurch gekennzeichnet, dass** er erste Beleuchtungsmittel (24, 25), die zur direkten Beleuchtung des umgebogenen Nadelendes (12) vorgesehen sind, und zweite Beleuchtungsmittel (13) zur indirekten Beleuchtung der Lichtleitung (16) und somit des Ziffernblattes (18) durch den Nadelarm (11) umfasst, wobei die ersten Beleuchtungsmittel (24) Mittel an Bord sind, die dazu vorgesehen sind, mit elektrischer Energie mit Hilfe einer flexiblen Schaltung (25) versorgt zu werden, von der ein Teil um die Nadelachse (8) gewickelt ist, wobei sich die flexible Schaltung entlang des Nadelarms (11) erstreckt.

2. Indikator nach Anspruch 1, bei dem ein Höhenauflagering (5) vorgesehen ist, auf dem eine Schutzscheibe (4) befestigt ist.

3. Indikator nach einem der Ansprüche 1 bis 2, bei dem der Nadelfinger (14) auf das Ende (26) des Nadelarms (11) aufgesetzt ist, und die ersten Beleuchtungsmittel (24) an diesem Armende am Eingang des gebogenen Fingers (14) montiert sind.

4. Indikator nach einem der Ansprüche 1 bis 3, bei dem die ersten Beleuchtungsmittel eine dreifarbige LED (24) umfassen.

## Claims

1. Instrument panel indicator comprising a needle (10) mounted rotatably on a shaft (8) of a drive motor (7), the needle including an arm (11) extended by a bent finger (14) with an indicating end (12) folded back towards the needle shaft (8) so as to be driven in circular translation in front of a dial (18) positioned on a light duct (16), the dial (18) and the light duct (16) extending between the indicating end (12) and the arm (11) of the needle, which is hidden by the light duct (16) and the dial (18), **characterized in that** it comprises first illumination means (24, 25) being provided for directly illuminating the backfolded needle end (12) and second illumination means (13) for indirectly illuminating, through the needle arm (11), the light duct (16) and hence the dial (18), the first illumination means (24) being embedded means arranged so as to be supplied with electrical power by means of a flexible circuit (25), a portion of which is rolled around the needle shaft (8), the flexible circuit extending along the needle arm (11).

2. Indicator according to Claim 1, in which a casing flange (5) is provided, to which a protective glass (4) is fixed.

3. Indicator according to either of Claims 1 and 2, in which the needle finger (14) is added to the end (26) of the needle arm (11) and the first illumination means (24) are mounted on this arm end, at the start of the bent finger (14).

4. Indicator according to one of Claims 1 to 3, in which the first illumination means comprise a three-colour LED (24).
